# EUROPÄISCHE PATENTANMELDUNG

(11) **EP 3 725 159 A1**
(43) Veröffentlichungstag der Anmeldung: **21.10.2020**
(21) Anmeldenummer: 20169516.0
(22) Anmeldetag: 15.04.2020
(51) Int. Cl.: A22C 17/00

(54) **MAGAZIN ZUR AUFNAHME VON LEBENSMITTELSTÜCKEN**

(30) Priorität: 17.04.2019 DE 202019102201 U
(71) Anmelder: MiVEG GmbH Automated Food Systems European, 91341 Röttenbach (DE)
(72) Erfinder: Kracker, Lars, 91341 Röttenbach (DE)
(74) Vertreter: Lösch, Christoph Ludwig Klaus

(57) **Zusammenfassung**

Die Erfindung betrifft ein Magazin zur Aufnahme von Lebensmittelstücken vor einem Aufspießen auf einen Spieß, wobei das Magazin aus mindestens zwei identischen Basiseinheiten (1, 101) gebildet wird und wobei jede der Basiseinheiten (1, 101) eine sich in einer Längsrichtung der Basiseinheit (1, 101) erstreckende Mittelwand (2), einen ersten Lagerblock (5), der an einem ersten längsseitigen Ende der Mittelwand (2) ausgebildet ist, einen zweiten Lagerblock (6), der an einem zweiten längsseitigen Ende der Mittelwand (2) ausgebildet ist, und eine orthogonal zur Mittelwand (2) angeordnete Grundplatte (7, 107) aufweist , die als seitlichen Abschluss in einer ersten Richtung ein erstes Verzahnungsprofil und als seitlichen Abschluss in einer der ersten Richtung entgegengesetzten zweiten Richtung ein zweites Verzahnungsprofil, welches als negatives Abbild des ersten Verzahnungsprofils ausgebildet ist, besitzt, und wobei in einer Anordnung, in der die Grundplatten (7, 107) einer ersten Basiseinheit (1, 101) und einer zweiten Basiseinheit (1, 101) in einer Ebene angeordnet sind und das erste Verzahnungsprofil der ersten Basiseinheit (1, 101) in das zweite Verzahnungsprofil der zweiten Basiseinheit (1, 101) eingreift, entlang der Längsrichtung der Basiseinheiten (1, 101) mindestens eine Kammer zur Aufnahme der Lebensmittelstücke und ein Durchgang für den Spieß gebildet sind.

## Beschreibung

Die Erfindung betrifft ein Magazin zur Aufnahme von Lebensmittelstücken vor einem Aufspießen auf einen Spieß und eine Vorrichtung zum Transport von Basiseinheiten des Magazins.

Das Aufspießen von Lebensmittelstücken auf einen Holz- oder Metallspieß zur anschließenden Zubereitung im Ofen oder auf einem Grill ist weit verbreitet. Beispiele für derartige Lebensmittelspieße sind Schaschlik- oder Kebabspieße, die aus Fleisch wie Rind und Hähnchen bestehen, Gemüsespieße aus Zwiebeln, Paprika und ähnlichem, Spieße mit Meeresfrüchten und/oder Fisch sowie gemischte Spieße aus Fleisch, Fisch und/oder Gemüse. In ähnlicher Weise können Spieße aus Trauben und Käse oder allgemein Fruchtspieße hergestellt werden.

Bei der klassischen manuellen Herstellung werden die gewünschten Lebensmittelstücke per Hand auf den Spieß gesteckt. Dies hat jedoch eine Reihe von Nachteilen. Beispielsweise kann der Spieß aufgrund der Krafteinwirkung beim Aufstecken brechen bzw. knicken. Auch ist nicht sichergestellt, dass die Lebensmittelstücke mittig fixiert werden, sodass ein (ungewünschtes) unregelmäßiges Aussehen des Schaschliks die Folge sein kann. Schließlich kann das Aufspießen der Lebensmittelstücke (je nach Konsistenz der Lebensmittel) mit einem relativ hohen Kraftaufwand verbunden sein und es besteht eine relativ hohe Verletzungsgefahr.

Neben der manuellen Herstellung gibt es daher Vorrichtungen, die ein automatisiertes Bestücken der Spieße mit Lebensmittelstücken erlauben. EP 1 437 046 A1 beschreibt eine derartige automatisierte Vorrichtung, die u.a. ein Magazin zur Aufnahme von Lebensmittelstücken und eine Vorrichtung zum Transport des Magazins aufweist. Das Magazin ist aus aneinandergereihten Basiseinheiten aufgebaut. Das dort beschriebene Magazin besitzt den Nachteil, dass der Lebensmittelspieß nach dem Bestücken mit den Lebensmittelstücken nur umständlich aus dem Magazin entfernt werden kann. Beispielsweise kommt es zu Anhaftungen der Lebensmittel (insbesondere beispielsweise bei marinierten Fleischstücken) in dem Magazin, was das Herauslösen des Lebensmittelspießes erschwert. Außerdem sind in dem oben genannten Magazin die Kammern, in denen die Lebensmittelstücke aufgenommen sind mit einem geschlossenen Boden und geschlossenen Seitenwänden ausgebildet. Die Entfernung des fertigen Lebensmittelspießes kann daher lediglich von der Oberseite des Magazins erfolgen. Auch dieser Umstand erschwert das Herauslösen bzw. Entfernen des Lebensmittelspießes aus dem Magazin.

Der Erfindung liegt die Aufgabe zugrunde, ein Magazin zur Aufnahme von Lebensmittelstücken vor einem Aufspießen auf einen Spieß bzw. eine Vorrichtung zum Transport von Basiseinheiten des Magazins anzubieten, bei dem das Herauslösen des fertigen Lebensmittelspießes leicht und einfach möglich ist.

Diese Aufgabe wird durch die Merkmale des Anspruchs 1 bzw. des Anspruchs 13 gelöst. Vorteilhafte Ausführungsformen sind in den Unteransprüchen beschrieben.

Das erfindungsgemäße Magazin zur Aufnahme von Lebensmittelstücken vor einem Aufspießen auf einen Spieß wird aus mindestens zwei identischen Basiseinheiten gebildet. Jede Basiseinheit weist eine sich in einer Längsrichtung der Basiseinheit erstreckende Mittelwand, einen ersten Lagerblock, der an einem ersten längsseitigen Ende der Mittelwand ausgebildet ist, einen zweiten Lagerblock, der an einem zweiten längsseitigen Ende der Mittelwand ausgebildet ist, und eine orthogonal zur Mittelwand angeordnete Grundplatte auf. Die Grundplatte besitzt als seitlichen Abschluss in einer ersten Richtung ein erstes Verzahnungsprofil und als seitlichen Abschluss in einer der ersten Richtung entgegengesetzten zweiten Richtung ein zweites Verzahnungsprofil, welches als negatives Abbild des ersten Verzahnungsprofils ausgebildet ist. In einer Anordnung, in der die Grundplatten einer ersten Basiseinheit und einer zweiten Basiseinheit in einer Ebene angeordnet sind und das erste Verzahnungsprofil der ersten Basiseinheit in das zweite Verzahnungsprofil der zweiten Basiseinheit eingreift, sind entlang der Längsrichtung der Basiseinheiten mindestens eine Kammer zur Aufnahme der Lebensmittelstücke und ein Durchgang für den Spieß gebildet.

Auf diese Weise bilden zwei nebeneinander angeordnete Basiseinheiten des Magazins in einer Anordnung, in der die beiden Grundplatten der Basiseinheiten in einer Ebene liegen, eine stabile, spaltfreie Auflagefläche für die Lebensmittelstücke. Die Lebensmittelstücke werden daher in dieser Anordnung zuverlässig im Magazin aufgenommen. Werden zwei Basiseinheiten hingegen zueinander verkippt bzw. aufgeklappt (z.B. beim Umlaufen des Magazins um eine Umlenkrolle oder ein Kettenritzel), so heben die vorstehenden Bereiche des Verzahnungsprofils die Lebensmittelstücke bzw. den fertigen Lebensmittelspieß leicht an. Das Herauslösen des Lebensmittelspießes wird dadurch erleichtert. Außerdem ermöglicht das oben genannte Verkippen bzw. Aufklappen eine seitliche Zugänglichkeit zu dem innerhalb des Magazins positionierten Lebensmittelspießes. Das Herauslösen des Lebensmittelspießes wird dadurch zusätzlich erleichtert.

In einer vorteilhaften Ausführungsform weisen die Verzahnungsprofile Vorsprünge, insbesondere rechteckige oder quadratische Vorsprünge, auf. Mit anderen Worten sind die oben genannten vorstehenden Bereiche des Verzahnungsprofils als rechteckige oder quadratische Vorsprünge ausgebildet.

Ist auf den Vorsprüngen ein Profil, insbesondere in Form von Erhebungen, ausgebildet, so kann das Herauslösen des Lebensmittelspießes weiter erleichtert werden, da die Lebensmittelstücke nicht vollflächig auf den Vorsprüngen aufliegen.

In einer vorteilhaften Ausführungsform weist die Basiseinheit ferner Trennwände auf, welche in der ersten Richtung und in der zweiten Richtung beidseitig senkrecht von der Mittelwand abstehen, sodass eine Reihe von Kammern zur Aufnahme der Lebensmittelstücke gebildet wird. In besonders vorteilhafter Weise bildet hierbei jeweils ein Vorsprung den Boden einer Kammer. Dadurch ist die sichere Lagerung der Lebensmittelstücke innerhalb der Kammer möglich.

Zur sicheren Führung des Spießes beim Eintreiben des Spießes in die Lebensmittelstücke sind in bevorzugter Weise jeweils eine Führung in den beiden Lagerblöcken und/oder Auflager an den Trennwänden ausgebildet.

In weiteren vorteilhaften Ausführungsformen sind auf einer der Mittelwand entgegengesetzten Oberfläche der Grundplatte mindestens eine Kettenaufnahme und/oder Fortsätze, insbesondere mit rechteckiger oder quadratischer Grundform, ausgebildet, um eine sichere Fortbewegung der Basiseinheiten entlang des vorgegebenen Bewegungspfades zu gewährleisten.

In einer weiteren vorteilhaften Ausführungsform weist das Magazin ferner einen Deckel auf, welcher die mindestens eine gebildete Kammer auf einer Oberseite abschließt. Auf diese Weise können die Lebensmittelstücke besonders lagestabil fixiert werden, sodass diese insbesondere während des Eintreibens des Spießes nicht aus der Kammer gedrückt werden.

Der Deckel kann sich hierbei über mehrere Reihen von Kammern erstrecken und der Deckel kann als seitlichen Abschluss in der ersten Richtung ein erstes Deckelverzahnungsprofil und als seitlichen Abschluss in der zweiten Richtung ein zweites Deckelverzahnungsprofil, welches als negatives Abbild des ersten Deckelverzahnungsprofils ausgebildet ist, besitzen.

Die erfindungsgemäße Vorrichtung zum Transport von Basiseinheiten des Magazins weist eine endlos umlaufende Transportkette, mit welcher die Basiseinheiten, insbesondere mittels der jeweiligen Kettenaufnahme verbunden sind, ein Kettenritzel, welches die endlos umlaufende Transportkette umlenkt, und ein Nockenrad, welches koaxial mit dem Kettenritzel angeordnet ist. Das Nockenrad weist entlang dessen Umfang gekrümmte Abschnitte und gerade Abschnitte auf und die Basiseinheiten liegen beim Umlauf um das Kettenritzel mit ihrer der Mittelwand entgegengesetzten Oberfläche der Grundplatte an den geraden Abschnitten an.

Durch das Aufliegen der Basiseinheiten auf den geraden Abschnitten werden die Basiseinheiten beim Umlaufen um das Kettenritzel einer definierten (Zwangs-)Bewegung unterzogen. Diese unterstützt den Auswurfprozess des fertigen Lebensmittelspießes während des Umlaufens des Magazins um das Kettenritzel. Entsprechend wird das Herauslösen des Lebensmittelspießes dadurch erleichtert.

Die Erfindung betrifft ferner ein Verfahren zur Herstellung von Lebensmittelspießen mit folgenden Verfahrensschritten:
- Einlegen von aufzuspießenden Lebensmittelstücken in die mindestens eine Kammer des oben beschriebenen Magazins,
- Eintreiben eines Spießes in Längsrichtung der Basiseinheiten durch die Lebensmittelstücke hindurch, in einer Anordnung, in der die Grundplatte der befüllten Basiseinheit in einer Ebene mit den Grundplatten der nachfolgenden und der vorhergehenden Basiseinheit angeordnet ist und die Verzahnungsprofile der befüllten Basiseinheit in das jeweilige korrespondierende Verzahnungsprofil der nachfolgenden und der vorhergehenden Basiseinheit eingreift,
- Umlenken der mit den fertigen Lebensmittelspießen befüllten Basiseinheiten um ein Kettenritzel und ein koaxial zu dem Kettenritzel angeordnetes Nockenrad mit gekrümmten Abschnitten und geraden Abschnitten entlang dessen Umfang, wobei die Basiseinheiten beim Umlauf mit ihrer Unterseite an den geraden Abschnitten des Nockenrades anliegen,
- Entfernen, insbesondere (aktive) Entnahme oder (passives) Herausfallenlassen, der fertigen Lebensmittelspieße aus den Basiseinheiten während des Umlenkens.

Die Erfindung ist anhand von Ausführungsbeispielen in den Zeichnungsfiguren weiter erläutert. Es zeigen:
- Fig. 1: eine Draufsicht auf eine erste Ausführungsform einer Basiseinheit des Magazins;
- Fig. 2: eine Schnittansicht durch die Basiseinheit entlang der Schnittebene A-A aus Fig. 1;
- Fig. 3: eine Seitenansicht der Basiseinheit aus Fig. 1;
- Fig. 4: eine weitere Seitenansicht der Basiseinheit aus Fig. 1;
- Fig. 5: eine Draufsicht auf eine zweite Ausführungsform einer Basiseinheit des Magazins; und
- Fig. 6: eine ausschnittsweise dargestellte Prinzipskizze einer Vorrichtung zum Transport der Basiseinheiten.

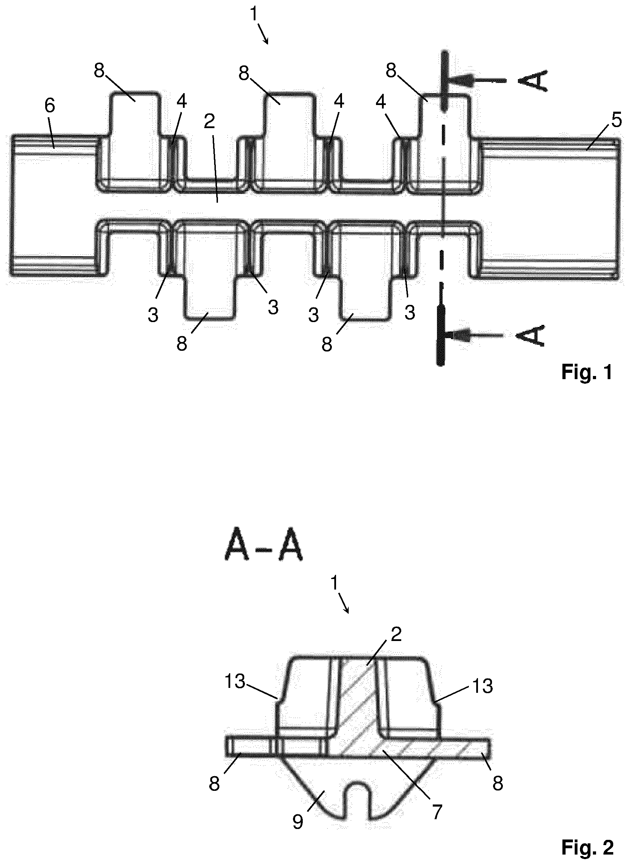

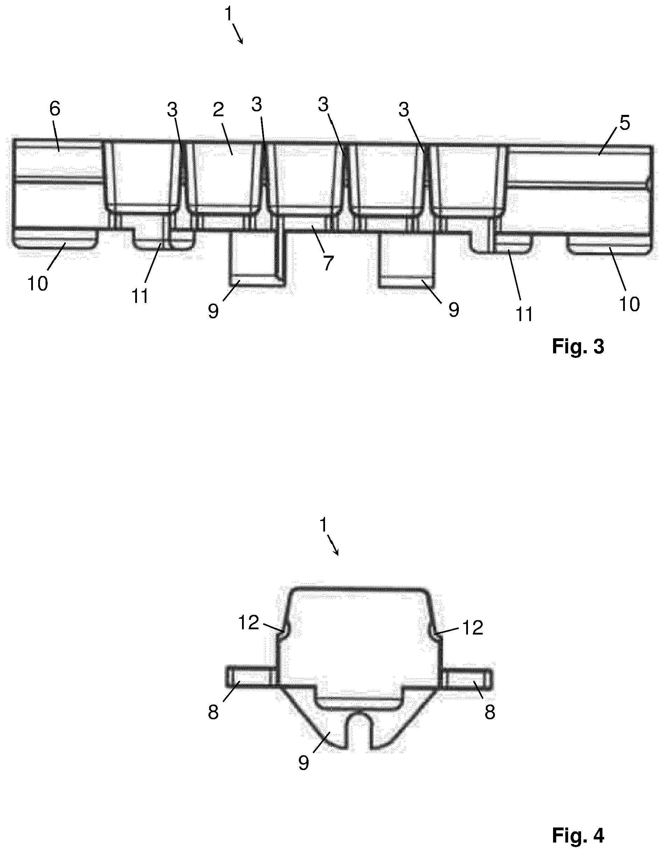

Fig. 1 bis Fig. 4 zeigen eine erste Ausführungsform einer Basiseinheit 1 eines Magazins zur Aufnahme von Lebensmittelstücken vor einem Aufspießen auf einen Spieß. Das Magazin besteht aus einer Mehrzahl von identischen Basiseinheiten 1, die in ihrer Gesamtheit das Magazin bilden.

Die Basiseinheit 1 weist eine Mittelwand 2 auf, die sich in Längsrichtung der Basiseinheit 1 erstreckt. Von der Mittelwand 2 stehen in eine erste Richtung Trennwände 3 und in eine zweite Richtung, die entgegengesetzt zur ersten Richtung orientiert ist, Trennwände 4 senkrecht von der Mittelwand 2 ab. An einem ersten längsseitigem Ende der Mittelwand 2 (in Fig. 1 auf der rechten Seite) ist ein erster Lagerblock 5 ausgebildet. An einem zweiten längsseitigem Ende der Mittelwand 2 (in Fig. 1 auf der linken Seite) ist ein zweiter Lagerblock 6 ausgebildet.

Eine orthogonal zur Mittelwand 2 und zu den Trennwänden 3, 4 angeordnete Grundplatte 7 besitzt als seitlichen Abschluss in der ersten Richtung ein erstes Verzahnungsprofil und als seitlichen Abschluss in der zweiten Richtung ein zweites Verzahnungsprofil, welches als negatives Abbild des ersten Verzahnungsprofils ausgebildet ist. Genauer weisen die Verzahnungsprofile Vorsprünge 8 auf. In einer Anordnung, in der die Grundplatten 7 einer ersten Basiseinheit 1 und einer zweiten Basiseinheit 1 in einer Ebene angeordnete sind und das erste Verzahnungsprofil der ersten Basiseinheit 1 in das zweite Verzahnungsprofil der zweiten Basiseinheit 1 eingreift, sind entlang der Längsrichtung der Basiseinheiten 1 eine Reihe von Kammern zur Aufnahme der Lebensmittelstücke und ein Durchgang für den Spieß gebildet.

Auf der Unterseite der Basiseinheit 1, also auf der der Mittelwand 2 entgegengesetzten Oberfläche der Grundplatte 7 sind eine Kettenaufnahme 9 und quaderförmige Fortsätze 10, 11 ausgebildet. Die Kettenaufnahme 9 dient zur Befestigung der Basiseinheit 1 an einer endlos umlaufenden Transportkette (in den Figuren nicht dargestellt). Mit Hilfe dieser Transportkette können die Basiseinheiten 1 von einer ersten Bearbeitungsstation, in der das Magazin mit den Lebensmittelstücken befüllt wird, zu einer zweiten Bearbeitungsstation, in der der Spieß in Längsrichtung der Basiseinheiten 1 eingetrieben wird und auf diese Weise der Lebensmittelspieß gebildet wird, und zu einer dritten Bearbeitungsstation, in der der fertige Lebensmittelspieß aus dem Magazin entnommen wird, transportiert werden. Die Fortsätze 10, 11 ermöglichen die sichere Führung der Basiseinheiten 1 entlang von Führungsschienen während des Transportes mit Hilfe der Transportkette.

In den Lagerblöcken 5, 6 ist jeweils eine Führung 12 für den Spieß ausgebildet. Ferner weist jede der Trennwände 3, 4 ein Auflager 13 für den Spieß auf. Beim Eintreiben des Spießes durch die innerhalb der Kammern angeordneten Lebensmittelstücke wird der Spieß durch die Führungen 12 und die Auflager 13 stabilisiert und seine Eintreibrichtung kontrolliert. Ein Brechen des Spießes wird auf diese Weise verhindert.

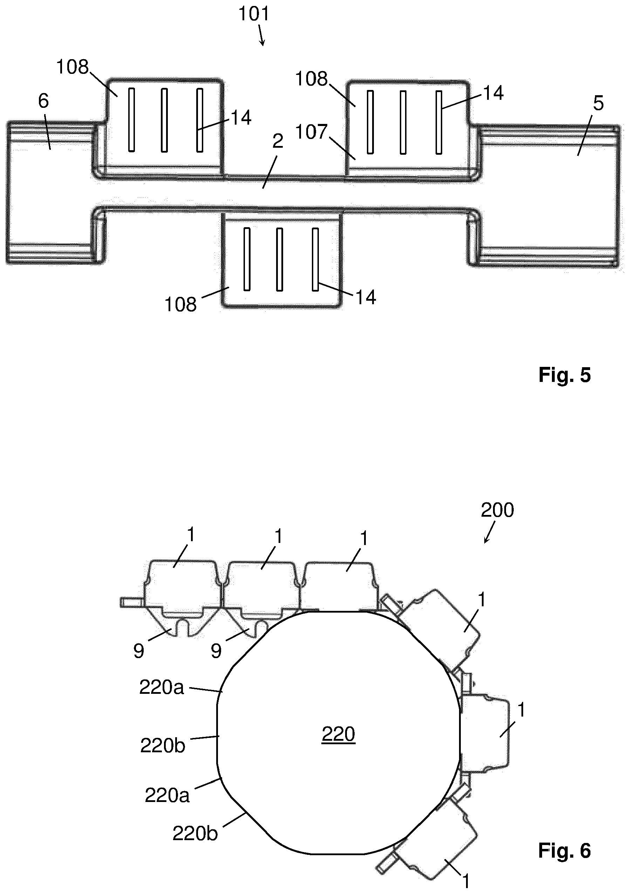

Fig. 5 zeigt eine weitere Ausführungsform der Basiseinheit. Die in Fig. 5 gewählte Ansicht entspricht hierbei der Ansicht aus Fig. 1. Die in Fig. 5 dargestellte Basiseinheit 101 weist eine Mittelwand 2 und zwei Lagerblöcke 5, 6 auf. Im Gegensatz zu der in Fig. 1 bis Fig. 4 dargestellten Ausführungsform weist die Basiseinheit 101 keine Trennwände 3, 4 auf. Ferner unterscheiden sich die Vorsprünge 108 der Grundplatte 107 von den Vorsprüngen 8 der ersten Ausführungsform. Die Vorsprünge 108 besitzen eine annähernd quadratische Grundform und weisen auf ihrer Oberseite Erhebungen 14 auf, sodass darauf abgelegte Lebensmittelstücke nicht vollflächig auf den Vorsprüngen 108 aufliegen.

Fig. 6 stellt eine ausschnittsweise dargestellte Prinzipskizze einer Vorrichtung 200 zum Transport der Basiseinheiten 1 des Magazins dar. Die Vorrichtung 200 weist eine in Fig. 6 nicht dargestellte endlos umlaufende Transportkette auf, die als eine Art Transportband dient. In diese Transportkette sind die Basiseinheiten 1 durch ihre Kettenaufnahme 9 eingeklinkt, sodass die Basiseinheiten 1 mit der Transportkette umlaufen. Die Umlaufbewegung kann hierbei sowohl konstant erfolgen, als auch intermittierend, sodass das Magazin zu bestimmten Zeiten für bestimmte Bearbeitungsschritte kurz angehalten wird und anschließend wieder in Bewegung gesetzt wird.

In einer Anordnung, in der die Grundplatten 7 benachbarter Basiseinheiten 1 in einer Ebene angeordnet sind - also in einer Anordnung zueinander, in der sich die drei in Fig. 6 links angeordneten Basiseinheiten 1 befinden - greifen die Verzahnungsprofile der Basiseinheiten 1 ineinander und es bilden sich Kammern innerhalb des Magazins aus, in die die Lebensmittelstücke eingelegt werden können. Ferner bildet sich zwischen jeweils zwei Basiseinheiten ein Durchgang für den Spieß aus. Nach Einlegen der Lebensmittelstücke kann daher das Eintreiben des Spießes erfolgen. Der Spieß wird hierbei durch die Führungen 12 der Lagerblöcke 5, 6 und die Auflager 13 geführt. Nachdem der Spieß vollständig durch die Lebensmittelstücke getrieben worden ist, liegt der fertige Lebensmittelspieß vor.

Anschließend wird die Transportkette durch ein Kettenritzel umgelenkt. Das Kettenritzel ist in Fig. 6 ebenfalls nicht zu erkennen, da es sich hinter dem in Fig. 6 sichtbaren Nockenrad 220 befindet. Das Nockenrad 220 ist koaxial mit dem Kettenritzel angeordnet. Das Nockenrad 220 weist entlang dessen Umfang abwechselnd angeordnete gekrümmte Abschnitte 220a und gerade Abschnitte 220b auf. Beim Umlauf um das Kettenritzel liegen die Basiseinheiten 1 mit ihrer der Mittelwand 2 entgegengesetzten Oberfläche der Grundplatte 7 - also mit ihrer Unterseite - an den geraden Abschnitten 220b des Nockenrades 220 an. Die drei in Fig. 6 rechts dargestellten Basiseinheiten 1 sind in einer derartigen um das Kettenritzel umlaufenden Position gezeigt. Durch das Umlaufen um das Kettenritzel und das Anliegen an den geraden Abschnitten 220b des Nockenrades 220 werden die benachbart zueinander liegenden Basiseinheiten zueinander verkippt bzw. aufgeklappt. Die Vorsprünge 8 des Verzahnungsprofils heben hierbei den jeweiligen Lebensmittelspieß leicht an. Zugleich wird durch das Verkippen bzw. Aufklappen die seitliche Zugänglichkeit zu dem Lebensmittelspießes erhöht und der Lebensmittelspieß kann unter Ausnutzung der Schwerkraft selbstständig aus dem Magazin herausfallen und beispielsweise in einem (in Fig. 6 nicht dargestellten) Auffangbehälter gesammelt werden.

### BEZUGSZEICHENLISTE

- 1, 101: Basiseinheit
- 2: Mittelwand
- 3, 4: Trennwand
- 5, 6: Lagerblock
- 7, 107: Grundplatte
- 8, 108: Vorsprung
- 9: Kettenaufnahme
- 10, 11: Fortsatz
- 12: Führung
- 13: Auflager
- 14: Erhebung
- 200: Vorrichtung zum Transport von Basiseinheiten
- 220: Nockenrad
- 220a: gekrümmter Abschnitt
- 220b: gerader Abschnitt

## Patentansprüche

1. Magazin zur Aufnahme von Lebensmittelstücken vor einem Aufspießen auf einen Spieß,
wobei das Magazin aus mindestens zwei identischen Basiseinheiten (1, 101) gebildet wird,
wobei jede der Basiseinheiten (1, 101) aufweist:
- eine sich in einer Längsrichtung der Basiseinheit (1, 101) erstreckende Mittelwand (2),
- einen ersten Lagerblock (5), der an einem ersten längsseitigen Ende der Mittelwand (2) ausgebildet ist,
- einen zweiten Lagerblock (6), der an einem zweiten längsseitigen Ende der Mittelwand (2) ausgebildet ist, und
- eine orthogonal zur Mittelwand (2) angeordnete Grundplatte (7, 107), die als seitlichen Abschluss in einer ersten Richtung ein erstes Verzahnungsprofil und als seitlichen Abschluss in einer der ersten Richtung entgegengesetzten zweiten Richtung ein zweites Verzahnungsprofil, welches als negatives Abbild des ersten Verzahnungsprofils ausgebildet ist, besitzt,
wobei in einer Anordnung, in der die Grundplatten (7, 107) einer ersten Basiseinheit (1, 101) und einer zweiten Basiseinheit (1, 101) in einer Ebene angeordnet sind und das erste Verzahnungsprofil der ersten Basiseinheit (1, 101) in das zweite Verzahnungsprofil der zweiten Basiseinheit (1, 101) eingreift, entlang der Längsrichtung der Basiseinheiten (1, 101) mindestens eine Kammer zur Aufnahme der Lebensmittelstücke und ein Durchgang für den Spieß gebildet sind.

2. Magazin nach Anspruch 1, wobei die Verzahnungsprofile Vorsprünge (8, 108), insbesondere rechteckige oder quadratische Vorsprünge, aufweisen.

3. Magazin nach einem der vorhergehenden Ansprüche, wobei die Basiseinheit (1) ferner Trennwände (3, 4) aufweist, welche in der ersten Richtung und in der zweiten Richtung beidseitig senkrecht von der Mittelwand (2) abstehen, sodass eine Reihe von Kammern zur Aufnahme der Lebensmittelstücke gebildet wird.

4. Magazin nach Anspruch 3, wobei jeweils ein Vorsprung (8) einen Boden einer Kammer bildet.

5. Magazin nach einem der Ansprüche 3 oder 4, wobei an den Trennwänden (3, 4) Auflager (13) für den Spieß ausgebildet sind.

6. Magazin nach einem der vorhergehenden Ansprüche, wobei in den Lagerblöcken (5, 6) jeweils eine Führung (12) für den Spieß ausgebildet ist.

7. Magazin nach einem der vorhergehenden Ansprüche, wobei auf den Vorsprüngen (108) ein Profil, insbesondere in Form von Erhebungen (14), ausgebildet ist.

8. Magazin nach einem der vorhergehenden Ansprüche, wobei auf einer der Mittelwand (2) entgegengesetzten Oberfläche der Grundplatte (7, 107) mindestens eine Kettenaufnahme (9) ausgebildet ist.

9. Magazin nach einem der vorhergehenden Ansprüche, wobei auf einer der Mittelwand (2) entgegengesetzten Oberfläche der Grundplatte (7, 107) Fortsätze (10, 11), insbesondere Fortsätze mit rechteckiger oder quadratischer Grundform, ausgebildet sind.

10. Magazin nach einem der vorhergehenden Ansprüche ferner aufweisend einen Deckel, welcher die mindestens eine gebildete Kammer auf einer Oberseite abschließt.

11. Magazin nach Anspruch 10, wobei der Deckel sich über mehrere Reihen von Kammern erstreckt.

12. Magazin nach einem der Ansprüche 10 oder 11, wobei der Deckel als seitlichen Abschluss in der ersten Richtung ein erstes Deckelverzahnungsprofil und als seitlichen Abschluss in der zweiten Richtung ein zweites Deckelverzahnungsprofil, welches als negatives Abbild des ersten Deckelverzahnungsprofils ausgebildet ist, besitzt.

13. Vorrichtung (200) zum Transport von Basiseinheiten (1, 101) des Magazins nach einem der vorhergehenden Ansprüche, wobei die Vorrichtung (200) aufweist:
- eine endlos umlaufende Transportkette, mit welcher die Basiseinheiten (1, 101), insbesondere mittels der jeweiligen Kettenaufnahme (9) verbunden sind,
- ein Kettenritzel, welches die endlos umlaufende Transportkette umlenkt, und
- ein Nockenrad (220), welches koaxial mit dem Kettenritzel angeordnet ist, wobei das Nockenrad (220) entlang dessen Umfang gekrümmte Abschnitte (220a) und gerade Abschnitte (220b) aufweist, und
wobei die Basiseinheiten (1, 101) beim Umlauf um das Kettenritzel mit ihrer der Mittelwand (2) entgegengesetzten Oberfläche der Grundplatte (7,107) an den geraden Abschnitten (220b) anliegen.
